# EUROPEAN PATENT SPECIFICATION

(11) **EP 1 285 470 B1**
(45) Date of publication and mention of the grant of the patent: **27.10.2004**
(21) Application number: 01933299.8
(22) Date of filing: 11.05.2001
(51) Int. Cl.: H01M 4/38, H01M 4/42, H01M 6/08, H01M 4/12

(54) **ZINC-BASED ELECTRODE FOR ALKALINE ELECTROCHEMICAL CELL**
ZINK ENTHALTENDE ELEKTRODE FÜR ALKALISCHE ELEKTROCHEMISCHE ZELLE
ELECTRODE A BASE DE ZINC POUR PILE ELECTROCHIMIQUE ALCALINE

(30) Priority: 11.05.2000 US 569195
(43) Date of publication of application: 26.02.2003
(73) Proprietor: Eveready Battery Company, Inc., Westlake, Ohio 44126 (US)
(72) Inventor: TANG, Nghia, C., Olmsted Township, OH 44138 (US)
(74) Representative: Weber, Thomas, Dr.Dipl.-Chem.
(86) International application number: PCT/US2001/015224
(87) International publication number: WO 2001/086740

(56) References cited:
- EP-A- 0 768 723
- WO-A-99/07030
- GB-A- 1 230 981
- PATENT ABSTRACTS OF JAPAN vol. 007, no. 222 (E-201), 4 October 1983 (1983-10-04) & JP 58 112254 A (MATSUSHITA DENKI SANGYO KK), 4 July 1983 (1983-07-04)

## Description

The present invention relates generally to alkaline electrochemical cells, and more particularly to an alkaline electrochemical cell having a gelled negative electrode containing zinc powder.

Alkaline electrochemical cells (i.e., batteries) generally include a positive electrode, commonly referred to as the cathode, and a negative electrode, commonly referred to as the anode, arranged in a container and separated by a separator. The anode, cathode, and separator simultaneously contact an alkaline electrolyte solution which typically includes potassium hydroxide (KOH). In some cells, the cathode comprises manganese dioxide (MnO₂) as the electrochemically active material, and further includes graphite and other additives. The anode typically comprises zinc powder as the electrochemically active material. The zinc powder is typically suspended in a gelling agent to provide a gel-type anode.

Conventional zinc-based cells commonly employ an unamalgamated coarse zinc powder having typical particle sizes up to 700 micrometers. Some conventional zinc electrodes employ zinc powder having an average particle size of approximately 160 micrometers. It is generally recognized that the use of smaller size zinc particles are more desirable in order to enhance service performance at high rate discharge. Battery manufacturers commonly employ zinc powder which typically includes a zinc dust with a particle size of less than 25 micrometers. Prior to use in batteries, the zinc powder is typically filtered during a sieving process to obtain a desired average zinc particle size. However, a certain amount of zinc dust generally remains present in the filtered zinc powder. In some batteries, battery manufacturers intentionally increase the amount of zinc dust, such as is disclosed in published Japanese Application No. SHO 57[1982]-182972 and PCT International Publication No. WO99/07030.

The zinc powder is generally classified by a specific average particle size, which may also be indicated by the standard mesh size through which the zinc powder is sieved. Zinc powder having a desired average particle size can be separated from other size particles by allowing zinc particles to pass through openings in a certain size mesh screen, while preventing other particles from passing through openings in a separate sized mesh screen. It should be appreciated that the size of the zinc particles is generally constrained within the limits of the mesh screens used in the sieves. However, in conventional zinc powder processing for battery applications, zinc dust (particles less than 25 micrometers) generally remains with the zinc powder and, as a consequence, the zinc dust is also employed in batteries by a battery manufacturer.

A goal in designing alkaline electrochemical cells is to increase the anode discharge performance, particularly at high rate discharge. While fine zinc particles may enhance the service performance achievable in a cell during a high rate discharge, excessive amounts of zinc dust may be the cause of other problems such as contributing to significant amounts of anode gassing, thus resulting in an undesired cell condition. It is therefore desirable to provide for an enhanced negative electrode that provides for enhanced service performance at high rate discharge, while minimizing the amount of gassing in the cell.

### SUMMARY OF THE INVENTION

The present invention improves the discharge service performance of an alkaline electrochemical cell, particularly for high rate discharge, while at the same time minimizing electrode gassing. To achieve this and other advantages, the present invention provides for a negative electrode for an alkaline electrochemical cell. The negative electrode comprises zinc powder having an average particle size substantially greater than 25 micrometers and, preferably, the zinc powder also has an average particle size of 150 micrometers or less. The zinc powder contains less than 1 weight percent zinc dust, based on the total weight of the zinc, and the particle size of the zinc dust is less than 25 micrometers. According to the preferred embodiment, the zinc powder contains substantially no zinc dust.

The present invention also provides for an alkaline electrochemical cell comprising a positive electrode, an alkaline electrolyte and a negative electrode comprising zinc powder having an average particle size substantially greater than 25 micrometers and, preferably, the zinc powder also has an average particle size of 150 micrometers or less. The zinc powder contains less than 1 weight percent zinc dust, based on the total weight of the zinc, and the particle size of the zinc dust is less than 25 micrometers. According to the preferred embodiment, the zinc powder contains substantially no zinc dust.

The present invention also includes a process for making the negative electrode for an electrochemical cell comprising the steps of providing a zinc powder, removing the dust from the zinc powder so that the zinc powder contains less than 1 weight percent zinc dust of a particle size less than 25 micrometers and then forming a negative electrode with the zinc powder.

In another embodiment, the present invention includes a method of manufacturing an electrochemical cell comprising the following steps. Providing a container with an open end. Disposing a cathode within the container. Inserting a separator within the container and in contact with the first electrode. Forming an anode comprising a zinc powder containing less than 1 weight percent zinc dust, based on the total weight of zinc. The zinc dust has a particle size less than 25 micrometers. Disposing the anode within the container such that the anode is physically isolated from the cathode by the separator. Disposing an electrolyte within the container and in contact with the cathode and anode and then sealing the open end of the container.

These and other features and advantages of the present invention will be further understood and appreciated by those skilled in the art by reference to the following specification, claims and appended drawings.

### BRIEF DESCRIPTION OF THE DRAWINGS

In the drawings:
FIG. 1 is a cutaway perspective view of an alkaline electrochemical cell employing a zinc-based negative electrode in accordance with the present invention;
FIG. 2 is a flow diagram illustrating a method of forming the zinc-based negative electrode according to the present invention;
FIG. 3 is a graph comparing measured gas evolution experienced during a test with zinc powder having various amount of zinc dust; and
FIG. 4 is a graph comparing measured gas evolution experienced during a test with various zinc powder having various particle sizes.

### DETAILED DESCRIPTION OF THE PREFERRED EMBODIMENTS

An anode of the present invention preferably employs zinc powder having an average particle size greater than 25 micrometers and less than 150 micrometers, and contains zinc dust in the amount of less than 1 weight percent of the total zinc. Zinc dust is defined herein as zinc particles having a particle size of less than 25 micrometers. More preferably, the zinc powder has substantially no zinc dust. Other embodiments of the present invention employ zinc powder having an average particle size less than 150 micrometers and greater than 45 micrometers, or greater than 65 micrometers, or greater than 85 micrometers. According to one embodiment, the average particle size of the zinc powder is between 100 micrometers and 120 micrometers, preferably equal to approximately 110 micrometers.

The average particle size of the zinc powder is referred to herein as the D₅₀ median value. The D₅₀ median value is determined by using the sieve analysis procedure described in the American Society for Testing and Materials (ASTM) standard B214-92, entitled Standard Test Method for Sieve Analysis of Granular Metal Powders, and the reporting procedure described in ASTM D1366-86 (Reapproved 1991), entitled Standard Practice for Reporting Particle Size Characteristics of Pigments. ASTM standards B214-92 and D1366-86 (Reapproved 1991) are herein incorporated by reference. As used in this document, the zinc powder's D₅₀ median value is determined by plotting the cumulative weight percentages versus the upper class size limits data, as shown in ASTM D-1366-86, and then finding the diameter (i.e. D₅₀) that corresponds to the fifty percent cumulative weight value.

The average particle size is achieved by controlling the zinc powder formation process and separating out (i.e., filtering) coarse zinc powder from the desired zinc powder during a sieving process which is known in the art. In addition, the zinc dust is substantially separated out during the sieving process such that zinc dust amounts to less than 1 weight percent of total zinc. It should be appreciated that by limiting the amount of zinc dust employed in the anode to less than 1 weight percent of total zinc, the amount of anode gassing is advantageously controlled to prevent excessive gassing. Accordingly, the present invention employs zinc powder having an average particle size of approximately 110 micrometers, while limiting the amount of zinc dust so as to minimize gassing within the cell.

One advantage to minimizing the gassing by reducing the quantity of zinc dust in the zinc powder is that surfactants conventionally used by battery manufacturers to reduce gassing can be eliminated from the anode's formula. Examples of typical surfactants are disclosed in US Patent No. 5,378,559. As a consequence of eliminating the need to use a surfactant in the anode, the electrochemical cell of this invention is manufactured free of surfactants leaving more volume for active electrochemical materials. While eliminating the use of surfactants is preferred, some embodiments of this invention may employ a surfactant to further reduce anode gassing.

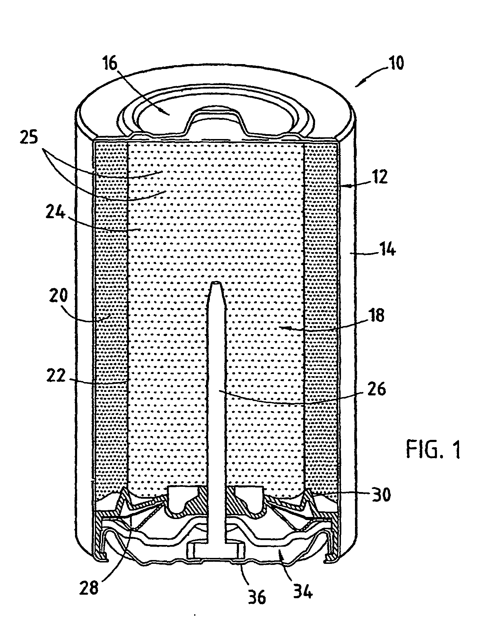

Referring to FIG. 1, a cutaway view of a cylindrical alkaline electrochemical cell 10 is shown employing zinc powder in an electrode according to the teachings of the present invention. Alkaline cell 10 generally includes a steel can 12 having a cylindrical shape with a closed bottom end and an open top end. A metalized, plastic film label 14 is formed about the exterior surface of steel can 12, except for the ends of steel can 12. At the closed end of steel can 12 is a positive cover preferably formed of plated steel. Film label 14 is formed over the peripheral edge of positive cover 16. The electrochemical cell 10 includes a positive electrode, referred to herein as the cathode 20 or first electrode, formed about the interior surface of steel can 12. The cathode 20 is preferably formed of a mixture of manganese dioxide, graphite, potassium hydroxide and water solution, and additives. A separator 22, which is preferably formed of a non-woven fabric that prevents migration of any solid particles in the cell is disposed about the interior surface of cathode 20. An alkaline electrolyte 24, preferably formed of potassium hydroxide solution, is disposed in the cathode 20, preferably within the interior of separator 22.

The electrochemical cell 10 further includes a negative electrode, referred to herein as the anode 18 or second electrode. The anode 18 is disposed in an anode compartment formed within the separator 22 with the electrolyte 24 and in contact with a current collector 26, which may include a brass nail. The anode 18 is a gel-type anode formed of a zinc powder 25 suspended in a gelling agent and alkaline electrolyte. The zinc powder 25 preferably has a relatively small particle size and yet has little or no zinc dust as provided according to the present invention. The anode 18 is composed of about 67 weight percent zinc powder, 0.5% weight percent gelling agent/indium salt, and 32.5 weight percent aqueous electrolyte which has 40% KOH/3% ZnO.

A nylon seal 30 is used to seal closed the open end of steel can 12 to prevent leakage of the active materials contained in steel can 12. Nylon seal 30 contacts a metal washer 28 and an inner cell cover 34, which is preferably formed of steel. A negative cover 36, which is preferably formed of plated steel, is disposed in contact with current collector 26 via a weld or pressure contact. Negative cover 36 is electrically insulated from steel can 12 by nylon seal 30.

The electrochemical cell 10 of Figure 1 is assembled by providing a steel can 12, also referred to herein as an open-ended container, into which cathode 20 is inserted. The cathode is formed about the interior surface of steel can 12. Separator 22 is inserted into the container within the hollow region defined by the cathode. Anode 18 is formed comprising a zinc powder containing less than 1 weight percent zinc dust, based on the total weight of the zinc. The zinc dust has a particle size less than 25 micrometers. Anode 18 is disposed within steel can 12 so that the anode 18 is physically separator from the cathode 20 by the separator 22. The steel can is then sealed close by crimping the current collector assembly to the open end of steel can 12. The current collector assembly comprises nylon seal 30, current collector 26, metal washer 28, inner cover 34 and negative cover 36.

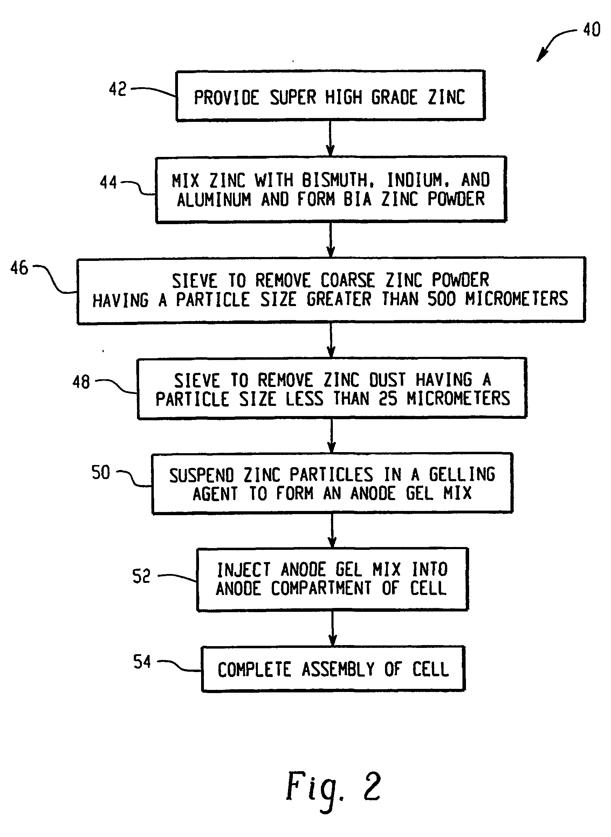

Referring to FIG. 2, a method 40 of making a negative electrode for assembly in an alkaline electrochemical cell is illustrated therein. Method 40 includes the initial step 42 of providing super high-grade (SHG) zinc which is typically available in the form of zinc ingots. It should be appreciated that super high grade zinc is preferably of a high-grade quality containing a low amount of impurities, if any. In step 44, the zinc is uniformly mixed with bismuth, indium, and aluminum to form a zinc alloy, referred to herein as BIA zinc, according to one embodiment. The individual quantities of bismuth, indium, and aluminum are typically between 50 ppm and 250 ppm. Examples of suitable alloys are disclosed in United States Patent No. 5,312,476. Step 44 may include melting the zinc ingots at a sufficient temperature, uniformly mixing the molten zinc with bismuth, indium and aluminum, and blowing the molten mix through a nozzle to cool and produce BIA zinc powder. Processes for forming zinc powder are well-known in the art, and zinc powder commercially available for use in electrochemical cells is available from Big River Zinc (USA), Union Miniere (Belgium), Grillo (Germany), Noranda (Canada) and Toho Zinc (Japan). It should be appreciated that other forms of zinc powder either alone or in combination with other additives may be employed. Once cooled, the zinc powder is generally made up of various size zinc particles which generally may range in size from about 2 micrometers to 700 micrometers in size, for example. It should be appreciated that step 44 of forming zinc powder may be optimally controlled to achieve a desired average zinc particle size.

Proceeding to step 46, the zinc powder is sieved to separate and remove coarse zinc powder having a particle size greater than 500 micrometers, for example. The coarse powder sieving may be achieved by employing a sieve having a U.S. mesh size of 35 which has an opening size of 500 micrometers. In step 48, the zinc powder is further sieved to separate and remove zinc dust having a particle size less than 25 micrometers. The removal of zinc dust by sieving may be achieved by employing a sieve having a U.S. mesh size of 500 which has an opening size of 25 micrometers. Repeated sieving may be employed until the zinc dust remaining is less than 1 weight percent of the total zinc powder. Other zinc dust removal techniques, such as floatation separation, may be employed to achieve less than I weight percent zinc dust. The sieved zinc powder is then suspended in a gelling agent in step 50. Suitable gelling agents, such as Carbopol C940 from B.F. Goodrich, are known in the art. The anode mix is then injected into an anode compartment in the electrochemical cell in step 52. Thereafter, assembly of the electrochemical cell is completed according to known cell assembly techniques in step 54.

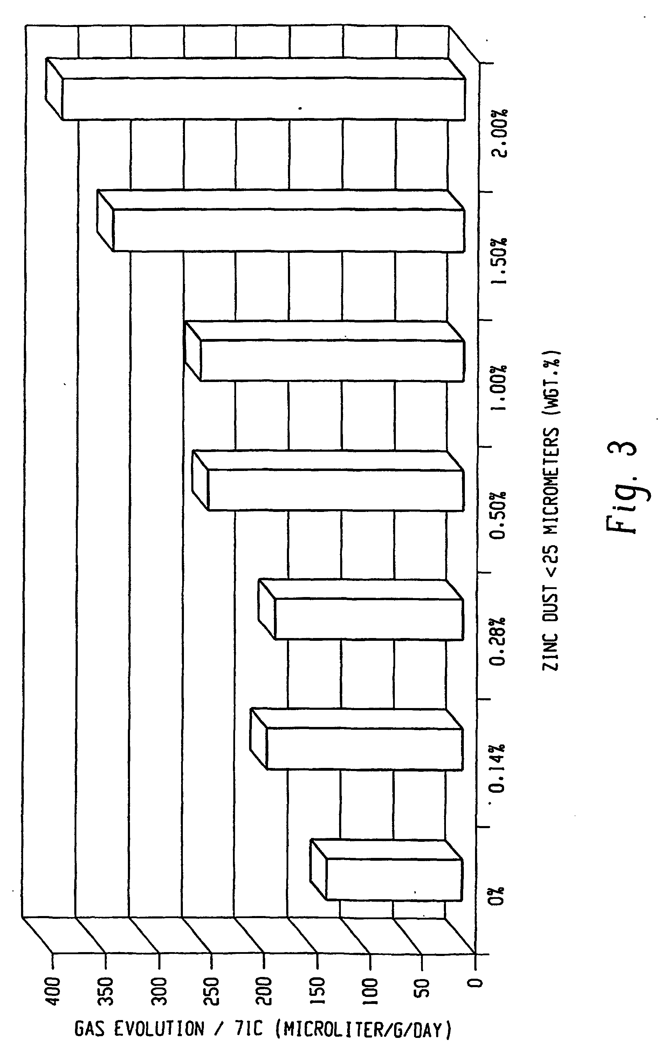

Referring to FIG. 3, comparative data is shown illustrating the gas evolution measured during a test for different percentages of zinc dust ranging from 0 to 2 weight percent of total zinc. The test was performed by mixing up to 5 grams of zinc powder having an average D₅₀ particle size of 110 micrometers and 45 percent KOH solution in an inverted test tube and heating the test tube in an oven at 71°C. The amount of gas evolution in units of microliters/gram/day was measured for each sample of zinc powder containing zinc dust in the amounts of 0, 0.14, 0.28, 0.50, 1.0, 1.5, and 2.0 weight percent of total zinc. At 1.5 weight percent zinc dust, the amount of measured gas evolution dropped substantially from the gas evolution measured at 2 weight percent zinc dust. Further, for zinc powder having less than 1 weight percent zinc dust, the measured gas evolution is more substantially reduced. Most preferably, the least amount of measured gas evolution was experienced with zinc powder having substantially no zinc dust.

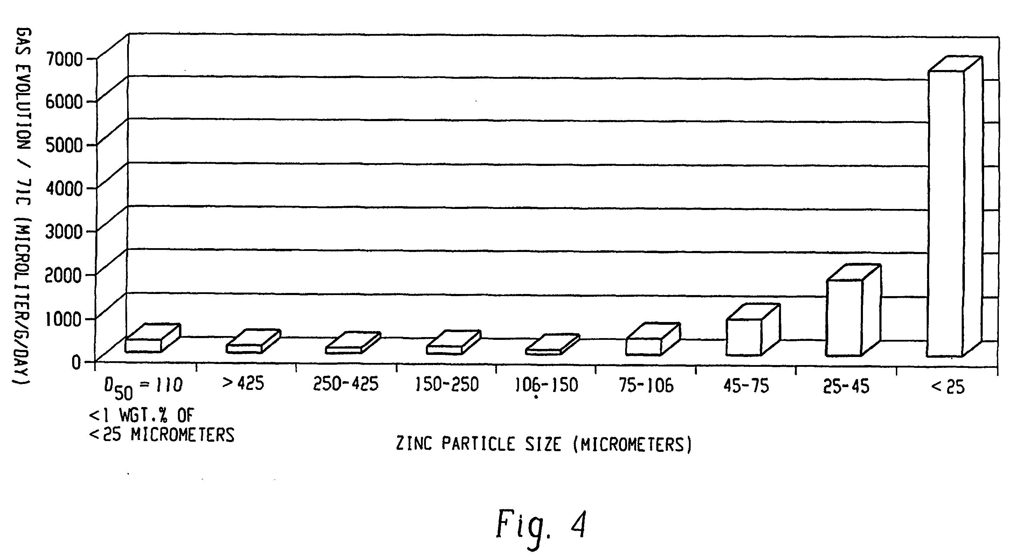

Referring to FIG. 4, the amount of gas evolution measured during another test is illustrated for various zinc particle sizes. When the entire zinc powder has a zinc particle size of less than 25 micrometers, the largest amount of gas evolution is experienced. The amount of gas evolved is reduced when the zinc powder particle size is increased above 25 micrometers. Accordingly, larger zinc powder particle sizes will typically produce less gassing in the cell. However, a reduced zinc powder particle size will generally enhance the cell discharge performance at a high rate discharge.

The present invention advantageously employs an average zinc particle size of less than or equal to 150 micrometers, and more preferably equal to approximately 110 micrometers, while minimizing the amount of zinc dust having a particle size of less than 25 micrometers to less than 1 weight percent of the total zinc.

It is contemplated that other cathodes, separators, cell cans, and collector and seal assemblies may be employed in use in various types of alkaline electrochemical cells with the anode containing zinc powder in accordance with the present invention. Accordingly, the zinc powder of the present invention can be employed in any zinc-based gel-type anode in an alkaline electrochemical cell.

## Claims

1. A negative electrode for an alkaline electrochemical cell, said negative electrode comprising zinc powder having an average particle size greater than 25 micrometers, wherein said zinc powder has less than 1 weight percent zinc dust of a particle size less than 25 micrometers.

2. The electrode as defined in claim 1, wherein said zinc powder has an average particle size, with preference in the order given, of 150 micrometers or less, 45 micrometers or more, 65 micrometers or more, 85 micrometers or more, between 100 micrometers and 120 micrometers, or approximately 110 micrometers.

3. The electrode as defined in claim 1, wherein said negative electrode is substantially free of surfactant.

4. The electrode as defined in claim 1, wherein said zinc powder is suspended in a gelling agent.

5. The electrode as defined in claim 1, wherein said negative electrode further comprises an alkaline electrolyte.

6. The electrode as defined in claim 1, wherein said negative electrode contains substantially no zinc dust having a particle size of less than 25 micrometers.

7. The electrode as defined in claim 1, wherein said zinc powder has less than 0.5 weight percent, preferably less than 0.28 weight percent, most preferably less than 0.14 weight percent zinc dust.

8. An alkaline electrochemical cell comprising:
a first electrode;
an alkaline electrolyte; and
a second electrode as defined in any one of claims 1 to 7.

9. A method of forming the negative electrode for an alkaline electrochemical cell as defined in any one of claims 1 to 7, said method comprising the steps of :
providing zinc powder;
substantially removing zinc dust from said zinc powder so that the zinc powder contains less than 1 weight percent zinc dust of a particle size less than 25 micrometers; and
forming a negative electrode with the zinc powder.

10. The method as defined in claim 9 further comprising the step of mixing the zinc powder with a gelling agent to form a gel-type negative electrode.

11. The method as defined in claim 9 further comprising the step of disposing the negative electrode in a container.

12. The method as defined in claim 9 further comprising the step of removing coarse zinc particles from the zinc powder.

13. The method as defined in claim 9 further comprising the step of adding alkaline electrolyte to the negative electrode.

14. The method as defined in claim 9, wherein said step of substantially removing zinc dust comprises removing substantially all of said zinc dust.

15. The method as defined in claim 9, wherein said step of substantially removing zinc dust comprises the step of sieving the zinc powder with a mesh sieve having a U. S. mesh size of 500.

16. A method of manufacturing an electrochemical cell, said method comprising the steps of :
providing a container with an open end;
disposing a first electrode within said container;
inserting a separator within said container and in contact with said first electrode;
forming a second electrode with a zinc powder containing less than 1 weight percent zinc dust, based on the total weight of zinc, said dust having a particle size less than 25 micrometers;
disposing said second electrode within said container and physically isolated from said first electrode by said separator ;
disposing an electrolyte within said container and in contact with said first and second electrodes; and
sealing the open end of said container.

17. The method of manufacturing an electrochemical cell according to claim 16, wherein said zinc powder has an average particle size, with preference in the order given, greater than 25 micrometers and less than 150 micrometers, greater than 45 micrometers and less than 150 micrometers, greater than 65 micrometers and less than 150 micrometers, greater than 85 micrometers and less than 150 micrometers, or between 100 micrometers and 120 micrometers.

18. The method of manufacturing an electrochemical cell according to claim 16, wherein said zinc powder has less than 0.5 weight percent zinc dust of a particle size less than 25 micrometers, more preferably less than 0.28 weight percent zinc dust of a particle size less than 25 micrometers, and most preferably less than 0.14 weight percent zinc dust of a particle size less than 25 micrometers.

19. The method of manufacturing an electrochemical cell according to claim 16, wherein said electrolyte is an alkaline electrolyte.

20. The method of manufacturing an electrochemical cell according to claim 16, wherein said second electrode is free of surfactant.

## Patentansprüche

1. Negative Elektrode für eine alkalische elektrochemische Zelle, wobei die negative Elektrode Zinkpulver mit einer mittleren Teilchengröße von über 25 µm umfasst, wobei das Zinkpulver weniger als 1 Gew.-% Zinkstaub mit einer Teilchengröße von weniger als 25 µm aufweist.

2. Elektrode gemäß Anspruch 1, wobei das Zinkpulver eine mittlere Teilchengröße, mit steigender Präferenz in der angegebenen Reihenfolge, von 150 µm oder weniger, 45 µm oder mehr, 65 µm oder mehr, 85 µm oder mehr, zwischen 100 µm und 120 µm oder ungefähr 110 µm hat.

3. Elektrode gemäß Anspruch 1, wobei die negative Elektrode im Wesentlichen frei von Tensid ist.

4. Elektrode gemäß Anspruch 1, wobei das Zinkpulver in einem Geliermittel suspendiert ist.

5. Elektrode gemäß Anspruch 1, wobei die negative Elektrode weiterhin einen alkalischen Elektrolyten umfasst.

6. Elektrode gemäß Anspruch 1, wobei die negative Elektrode im Wesentlichen keinen Zinkstaub mit einer Teilchengröße von weniger als 25 µm aufweist.

7. Elektrode gemäß Anspruch 1, wobei das Zinkpulver weniger als 0,5 Gew.-%, vorzugsweise weniger als 0,28 Gew.-%, am meisten bevorzugt weniger als 0,14 Gew.-% Zinkstaub aufweist.

8. Alkalische elektrochemische Zelle, umfassend:
eine erste Elektrode;
einen alkalischen Elektrolyten; und
eine zweite Elektrode gemäß einem der Ansprüche 1 bis 7.

9. Verfahren zur Bildung der negativen Elektrode für eine alkalische elektrochemische Zelle gemäß einem der Ansprüche 1 bis 7, wobei das Verfahren die folgenden Schritte umfasst:
Bereitstellen von Zinkpulver;
den Zinkstaub im Wesentlichen aus dem Zinkpulver entfernen, so dass das Zinkpulver weniger als 1 Gew.-% Zinkstaub mit einer Teilchengröße von weniger als 25 µm enthält; und
Bilden einer negativen Elektrode mit dem Zinkpulver.

10. Verfahren gemäß Anspruch 9, das weiterhin den Schritt des Mischens des Zinkpulvers mit einem Geliermittel unter Bildung einer negativen Elektrode des Geltyps umfasst.

11. Verfahren gemäß Anspruch 9, das weiterhin den Schritt des Ablegens der negativen Elektrode in einem Behälter umfasst.

12. Verfahren gemäß Anspruch 9, das weiterhin den Schritt des Entfernens von groben Zinkteilchen aus dem Zinkpulver umfasst.

13. Verfahren gemäß Anspruch 9, das weiterhin den Schritt des Hinzufügens von alkalischem Elektrolyten zu der negativen Elektrode umfasst.

14. Verfahren gemäß Anspruch 9, wobei der Schritt des im-Wesentlichen-Entfernens des Zinkstaubs das Entfernen im Wesentlichen des gesamten Zinkstaubs umfasst.

15. Verfahren gemäß Anspruch 9, wobei der Schritt des im-Wesentlichen-Entfernens des Zinkstaubs den Schritt des Siebens des Zinkpulvers mit einem Maschensieb mit einer US-Maschengröße von 500 mesh umfasst.

16. Verfahren zur Herstellung einer elektrochemischen Zelle, wobei das Verfahren die folgenden Schritte umfasst:
Bereitstellen eines Behälters mit einem offenen Ende;
Ablegen einer ersten Elektrode in dem Behälter;
Einsetzen eines Separators in den Behälter in Kontakt mit der ersten Elektrode;
Bilden einer zweiten Elektrode mit einem Zinkpulver, das weniger als 1 Gew.-% Zinkstaub enthält, bezogen auf das Gesamtgewicht des Zinks, wobei der Staub eine Teilchengröße von weniger als 25 µm hat;
Ablegen der zweiten Elektrode in den Behälter, so dass sie durch den Separator physikalisch gegenüber der ersten Elektrode isoliert ist;
Ablegen eines Elektrolyten in dem Behälter und in Kontakt mit der ersten und der zweiten Elektrode; und
Verschließen des offenen Endes des Behälters.

17. Verfahren zur Herstellung einer elektrochemischen Zelle gemäß Anspruch 16, wobei das Zinkpulver eine mittlere Teilchengröße, mit steigender Präferenz in der angegebenen Reihenfolge, von mehr als 25 µm und weniger als 150 µm, mehr als 45 µm und weniger als 150 µm, mehr als 65 µm und weniger als 150 µm, mehr als 85 µm und weniger als 150 µm oder zwischen 100 µm und 120 µm hat.

18. Verfahren zur Herstellung einer elektrochemischen Zelle gemäß Anspruch 16, wobei das Zinkpulver weniger als 0,5 Gew.-% Zinkstaub mit einer Teilchengröße von weniger als 25 µm, besonders bevorzugt weniger als 0,28 Gew.-% Zinkstaub mit einer Teilchengröße von weniger als 25 µm und am meisten bevorzugt weniger als 0,14 Gew.-% Zinkstaub mit einer Teilchengröße von weniger als 25 µm aufweist.

19. Verfahren zur Herstellung einer elektrochemischen Zelle gemäß Anspruch 16, wobei der Elektrolyt ein alkalischer Elektrolyt ist.

20. Verfahren zur Herstellung einer elektrochemischen Zelle gemäß Anspruch 16, wobei die zweite Elektrode frei von Tensid ist.

## Revendications

1. Electrode négative pour pile électrochimique alcaline, ladite électrode négative comprenant de la poudre de zinc dont la taille moyenne de particule est supérieure à 25 micromètres, ladite poudre de zinc comportant moins de 1 pour cent en poids de poussière de zinc dont la taille de particule est inférieure à 25 micromètres.

2. Electrode telle que définie dans la revendication 1, dans laquelle ladite poudre de zinc a une taille moyenne de particule, avec préférence dans l'ordre donné, de 150 micromètres ou moins, 45 micromètres ou plus, 65 micromètres ou plus, 85 micromètres ou plus, entre 100 micromètres et 120 micromètres, ou approximativement de 110 micromètres.

3. Electrode telle que définie dans la revendication 1, ladite électrode négative étant en grande partie exempte d'agent tensio-actif.

4. Electrode telle que définie dans la revendication 1, ladite poudre de zinc étant en suspension dans un agent gélifiant.

5. Electrode telle que définie dans la revendication 1, ladite électrode négative comprenant en outre un électrolyte alcalin.

6. Electrode telle que définie dans la revendication 1, ladite électrode négative ne contenant pratiquement pas de poussière de zinc dont la taille de particule est inférieure à 25 micromètres.

7. Electrode telle que définie dans la revendication 1, ladite poudre de zinc comportant moins de 0,5 pour cent en poids, de préférence moins de 0,28 pour cent en poids, de manière préférée entre toutes moins de 0,14 pour cent en poids de poussière de zinc.

8. Pile électrochimique alcaline comprenant :
une première électrode ;
un électrolyte alcalin ; et ,
une seconde électrode telle que définie dans l'une quelconque des revendications 1 à 7.

9. Procédé de formation de l'électrode négative pour pile électrochimique alcaline telle que définie dans l'une quelconque des revendications 1 à 7, ledit procédé comprenant les étapes de :
fournir de la poudre de zinc ;
enlever en grande partie la poussière de zinc de ladite poudre de zinc de façon à ce que la poudre de zinc contienne moins de 1 pour cent en poids de poussière de zinc dont la taille de particule est inférieure à 25 micromètres ; et
former une électrode négative avec la poudre de zinc.

10. Procédé tel que défini dans la revendication 9, comprenant en outre l'étape de mélanger la poudre de zinc avec un agent gélifiant pour former une électrode négative de type gel.

11. Procédé tel que défini dans la revendication 9, comprenant en outre l'étape de disposer l'électrode négative dans un récipient.

12. Procédé tel que défini dans la revendication 9, comprenant en outre l'étape d'enlever les grosses particules de zinc de la poudre de zinc.

13. Procédé tel que défini dans la revendication 9, comprenant en outre l'étape d'ajouter un électrolyte alcalin à l'électrode négative.

14. Procédé tel que défini dans la revendication 9, dans lequel ladite étape d'enlever en grande partie la poussière de zinc comprend l'enlèvement de pratiquement toute ladite poussière de zinc.

15. Procédé tel que défini dans la revendication 9, dans lequel ladite étape d'enlever en grande partie la poussière de zinc comprend l'étape de tamiser la poudre de zinc avec un tamis à mailles ayant une taille de maille U.S. de 500.

16. Procédé de fabrication d'une pile électrochimique, ledit procédé comprenant les étapes de :
fournir un récipient comportant une extrémité ouverte ;
disposer une première électrode à l'intérieur dudit récipient ;
insérer un séparateur à l'intérieur dudit récipient et en contact avec ladite première électrode ;
former une seconde électrode avec une poudre de zinc contenant moins de 1 pour cent en poids de poussière de zinc, par rapport au poids total de zinc, ladite poussière ayant une taille de particule inférieure à 25 micromètres ;
disposer ladite seconde électrode à l'intérieur dudit récipient et physiquement isolée de ladite première électrode par ledit séparateur ;
disposer un électrolyte à l'intérieur dudit récipient et en contact avec ladite première électrode et ladite seconde électrode ; et
fermer hermétiquement l'extrémité ouverte dudit récipient.

17. Procédé de fabrication d'une pile électrochimique selon la revendication 16, dans lequel ladite poudre de zinc a une taille moyenne de particule, avec préférence dans l'ordre donné, supérieure à 25 micromètres et inférieure à 150 micromètres, supérieure à 45 micromètres et inférieure à 150 micromètres, supérieure à 65 micromètres et inférieure à 150 micromètres, supérieure à 85 micromètres et inférieure à 150 micromètres, ou entre 100 micromètres et 120 micromètres.

18. Procédé de fabrication d'une pile électrochimique selon la revendication 16, dans lequel ladite poudre de zinc comporte moins de 0,5 pour cent en poids de poussière de zinc dont la taille de particule est inférieure à 25 micromètres, plus encore de préférence moins de 0,28 pour cent en poids de poussière de zinc dont la taille de particule est inférieure à 25 micromètres et, de manière préférée entre toutes, moins de 0,14 pour cent en poids de poussière de zinc dont la taille de particule est inférieure à 25 micromètres.

19. Procédé de fabrication d'une pile électrochimique selon la revendication 16, dans lequel ledit électrolyte est un électrolyte alcalin.

20. Procédé de fabrication d'une pile électrochimique selon la revendication 16, dans lequel ladite seconde électrode est exempte d'agent tensio-actif.
